# EUROPÄISCHE PATENTANMELDUNG

(11) **EP 4 485 765 A1**
(43) Veröffentlichungstag der Anmeldung: **01.01.2025**
(21) Anmeldenummer: 23182545.6
(22) Anmeldetag: 29.06.2023
(51) Int. Cl.: H02K 11/25

(54) **HALTEVORRICHTUNG FÜR EINEN STATOR EINER ELEKTRISCHEN ROTATIONSMASCHINE, FAHRZEUG UND VERFAHREN ZUR HERSTELLUNG**

(71) Anmelder: Valeo eAutomotive Germany GmbH, 91056 Erlangen (DE)
(72) Erfinder: Finger-Albert, Christian, 91056 Erlangen (DE); Bohn, Mona, 91056 Erlangen (DE)
(74) Vertreter: Valeo Powertrain Systems

(57) **Zusammenfassung**

Haltevorrichtung (1) für einen Stator einer elektrischen Rotationsmaschine, umfassend einen Grundkörper (2), aufweisend eine Oberseite (3), eine Unterseite (4), einen umlaufenden Rand (8), der die Oberseite (3) mit der Unterseite (4) verbindet, wenigstens eine axiale Durchgangsöffnung (9), und ein auf der Oberseite (3) angeordnetes Aufnahmeelement (10) zur Befestigung einer elektrischen Anordnung.

## Beschreibung

Die Erfindung betrifft eine Haltevorrichtung für einen Stator einer elektrischen Rotationsmaschine, einen Stator, eine elektrische Rotationsmaschine, ein Fahrzeug und ein Herstellungsverfahren.

Bei einer elektrischen Rotationsmaschine besteht der Bedarf, die Temperatur eines Stators zu überwachen. Dabei wird die Temperatur im Bereich eines aus einem Statorkern herausragenden Wicklungskopfs erfasst. Die so erfasste Temperatur kann beispielsweise der Einleitung von Schutzmaßnahmen beim Betrieb der elektrischen Maschine dienen, um beispielsweise eine Überhitzung zu vermeiden. Dafür ist es notwendig einen Temperatursensor sicher an dem Stator zu befestigen.

DE102018103249 (A1) offenbart eine Haltevorrichtung für einen Temperatursensor an einem Stator. Dabei wird der Temperatursensor - mittels eines Greifers, der einen Formleiter, der aus einer Statornut ragt, umklammert - lösbar an einem Stator angebracht. Durch Vibrationen und Verschleißerscheinungen kann sich der Greifer aber lösen, und den Sensor verschieben, sodass eine zuverlässige Temperaturmessung nicht mehr gewährleistet ist.

Aufgabe der Erfindung ist es, eine verbesserte Haltevorrichtung für einen Temperatursensor für einen Stator anzugeben.

Diese Aufgabe der Erfindung wird gelöst durch eine Haltevorrichtung für einen Stator einer elektrischen Rotationsmaschine, umfassend einen Grundkörper, aufweisend eine Oberseite und eine Unterseite, einen umlaufenden Rand, der die Oberseite mit der Unterseite verbindet, wenigstens eine axiale Durchgangsöffnung, und ein auf der Oberseite angeordnetes Aufnahmeelement zur Aufnahme einer elektrischen Anordnung.

Der Grundkörper ist zur Auflage auf einen Statorkern geeignet, wobei durch die Durchgangsöffnung wenigstens ein elektrischer Leiter eines Wickelkopfs geführt werden kann, sodass das der Grundkörper sicher an dem Statorkern befestigt ist. Ferner kann an dem Aufnahmeelement ein Temperatursensor befestigt werden. Dadurch ist der Temperatursensor sicher an dem Statorkern und damit an dem Wickelkopf angebracht. Damit ist eine zuverlässige Temperaturmessung gewährleistet.

Der Statorkern weist im Wesentlichen die Form eines hohlen Zylinders auf. Die Richtungsangabe "axial" bezieht sich auf alle parallel zur Achse des Zylinders verlaufenden Richtungen. Weiterhin bezieht sich die Richtungsangabe "radial" auf eine rechtwinklig von der Achse ausgehende Richtung.

Der Statorkern kann einen mittigen, zur Aufnahme eines Rotors geeigneten freien Raum aufweisen.

Insbesondere kann die Grundfläche des Grundkörpers einem ringsektorförmigen Abschnitt der Stirnseite eines Stators entsprechen. Dadurch kann der Grundkörper auf den Abschnitt aufgelegt werden.

Insbesondere kann die Grundfläche des Grundkörpers eine geringere radiale Ausdehnung haben, als der Stator. Dadurch kann die Haltevorrichtung einfach Fertigungstoleranzen einhalten und kommt beim Einbau nicht mit den Leitern, dem Rotor oder dem umgebenden Gehäuse in Konflikt.

Insbesondere kann die Grundfläche des Grundkörpers von der Stator Innenseite ein wenig radial nach außen versetzt sein. Dadurch bleibt der Bereich für einen Rotor frei.

Die axiale Durchgangsöffnung, die sich von der radial innen gelegenen Seite des Randes zu einer radial äußeren Seite des Randes erstrecken kann, kann von in Radialrichtung ausgerichteten Speichen begrenzt sein.

Die axiale Durchgangsöffnung kann mit einer Nut fluchten.

Die Kontur des Querschnitts der Durchgangsöffnung und die Kontur des Querschnitts der Nut können einander entsprechen.

Die radiale Ausdehnung der Durchgangsöffnung kann größer sein als die radiale Ausdehnung der Nut.

Die Ausdehnung der Durchgangsöffnung entlang des Umfangs kann größer sein als die Ausdehnung der Nut entlang des Umfangs.

Die Haltevorrichtung kann auch ein auf der Oberseite angeordnetes Klemmelement aufweisen. Insbesondere kann ein elektrischer Leiter der Statorwicklung, z.B. ein Formleiter, an dem Klemmelement anliegen. Auf diese Weise wird die Haltevorrichtung mit dem elektrischen Leiter am Statorkern gehalten.

Das Klemmelement kann sich in Radialrichtung erstrecken. Dadurch kann das Klemmelement an mehreren radial hintereinander angeordneten Formleitern anliegen, sodass die Positionierung der Haltevorrichtung am Statorkern stabilisiert wird. Alternativ dazu kann sich das Klemmelement auch schräg zur Radialrichtung erstrecken.

Optional kann das Klemmelement einen dreieckigen, rechteckigen, halbkreis- oder trapezförmigen Querschnitt entlang des Umfangs aufweisen. Dadurch kann der Kontaktbereich zwischen der Haltevorrichtung und einem zu dem Querschnitt passend geformten Formleiter vergrößert werden, sodass die Stabilität der Anordnung weiter erhöht wird.

Das Klemmelement kann einen Hohlraum aufweisen. Dadurch kann das Gewicht gemindert werden.

Der Hohlraum kann sich in Radialrichtung erstrecken.

Das Klemmelement kann aus einem elastischen Material hergestellt sein. Dadurch kann sich das Klemmelement an die Form der Formleiter anpassen und auf letztere eine Rückstellkraft ausüben.

Ein Formleiter kann ein elektrischer Leiter mit einem rechteckigen Querschnitt sein. Er kann gebogen als U-pin, der in zwei Nuten aufgenommen werden kann, oder als I-pin, der in einer Nut aufgenommen werden kann, ausgeführt sein. An seinen Enden kann der Formleiter mit andern Formleitern oder mit Anschlussleitern verbunden werden, z.B. durch Schweißen. Ein Formleiter kann formstabil sein.

Der Grundkörper kann mehrere axiale Durchgangsöffnungen aufweisen. Eine Vergrößerung des Grundkörpers kann die Stabilität erhöhen. Dadurch kann ein elektrischer Leiter mehrfach durch den Grundkörper geführt werden, bzw. mehrere elektrische Leiter können durch den Grundkörper geführt werden, sodass die Haltevorrichtung sicherer am Statorkern befestigt ist.

Das Klemmelement kann zwischen zwei der Durchgangsöffnungen angeordnet sein. Damit ist es möglich, dass ein durch eine Durchgangsöffnung geführter elektrischer Leiter und ein durch die andere Durchgangsöffnung geführter weiterer elektrischer Leiter beide axial an dem Klemmelement anliegen, sodass die Haltevorrichtung besser an dem Statorkern gehalten wird.

Die Oberseite kann ein weiteres Klemmelement aufweisen und eine der Durchgangsöffnungen kann zwischen diesen Klemmelementen angeordnet sein. Dadurch kann ein erster elektrischer Leiter an einem Klemmelement und ein weiterer elektrischer Leiter an dem anderen Klemmelement axial anliegen, sodass die Haltevorrichtung und auch das Aufnahmeelement besonders gut am Wicklungskopf festgehalten werden.

Der Grundkörper kann wenigstens eine axial durchgängige Ablauföffnung aufweisen, welche von dem Aufnahmeelement begrenzt sein kann. Beim Imprägnieren des Stators kann ein flüssiger Isolierstoff durch die Ablauföffnung abfließen. Somit kann z.B. einer übermäßigen Isolierstoffansammlung auf der Haltevorrichtung entgegengewirkt werden.

Die Haltevorrichtung kann eine Ausnehmung aufweisen. Die Ausnehmung kann von der Stirnseite des Statorkerns beabstandet und unter der Ablauföffnung angeordnet sein, sodass überflüssiger Isolierstoff durch sie hindurch und von der Stirnseite ablaufen kann.

Das Abfließen von überflüssigem Isolierstoff ist somit durch die Ablauföffnung vereinfacht.

Die Ausnehmung kann bezüglich der Durchgangsöffnung radial innen oder außen angeordnet sein.

Die Ablauföffnung kann radial mit einer der Durchgangsöffnungen fluchten oder zur nächstliegenden Durchgangsöffnung entlang des Umfangs versetzt sein.

Das Aufnahmeelement kann bezüglich der Axialrichtung geneigt sein. Der Neigungswinkel kann zwischen 0 und 40 Grad, bevorzugt zwischen 10 und 30 Grad, bevorzugt 20 Grad betragen. Dadurch kann der Temperatursensor besonders fest zwischen Halteelement und Formleiter positioniert sein.

Eine elektrische Anordnung kann an dem Aufnahmeelement befestigt sein. Dadurch ist die elektrische Anordnung nahe an dem Wicklungskopf fixiert.

Die elektrische Anordnung kann unter anderem einen Temperatursensor, eine Sternpunktstromschiene, ein anderes elektrisches Bauelement oder einen anderen elektrischen Leiter umfassen.

An der Haltevorrichtung kann eine Klammer befestigt sein, an welcher eine elektrische Anordnung, zum Beispiel ein Temperatursensor angebracht sein kann. Die Klammer kann einen ersten Schenkel mit einer Öse zur Aufnahme eines Rastelements eines Aufnahmeelements umfassen. Ferner kann die Klammer einen zweiten Schenkel umfassen, an dem die elektrische Anordnung befestigt sein kann. Dazu kann der Schenkel über ein Halteelement, beispielsweise einen Haken, verfügen. Der Schenkel mit dem Halteelement kann der Wicklung zugewandt sein.

Mit der Haltevorrichtung kann der Temperatursensor besonders nah und sicher am Wicklungskopf positioniert werden, sodass eine besonders genaue und zuverlässige Messung der Temperatur des Wicklungskopfes möglich wird.

Der Temperatursensor kann einen Anschlussabschnitt aufweisen, der an einem elektrischen Messgerät angeschlossen werden kann.

Der Temperatursensor kann zwischen der Klammer und dem Grundkörper eine Messpille aufweisen. Die Messpille kann die Temperatur aufnehmen und an das Messgerät weitergeben.

Auch bei der Montage kann der Temperatursensor einfach aus Axialrichtung eingeführt, bzw. verhakt und mit dem Wickelkopf in Verbindung gebracht werden. Eine Rückstellkraft kann dabei die beiden Schenkel zueinander pressen.

Die Wicklung einer Phase, bzw. eines Strompfades kann sich zwischen einem mit einem Wechselrichter verbundenen Zuleitungskontaktformleiter und einem mit der Sternpunktstromschiene verbundenen Endleiter erstrecken. Die Sternpunktstromschiene kann stoffschlüssig mit dem Endleiter verbunden sein, z. B. durch Verschweißen. Der Endleiter kann im Falle einer Wicklung mit Formleitern ein U-Pin oder ein I-Pin sein.

Die Sternpunktstromschiene kann mittels einer Schienenhalterung am Aufnahmeelement befestigt sein. Die Sternpunktstromschiene kann beispielsweise vor dem verschweißen in eine Schienenhalterung eingelegt sein. Die Schienenhalterung kann am Aufnahmeelement befestigt sein. Dadurch kann die Sternpunktstromschiene besser positioniert sein. Das Verschweißen der Sternpunktstromschiene mit dem Endleiter kann somit auch industrialisiert werden.

Zudem kann die Schienenhalterung aus einem elektrisch isolierenden Material sein. Das elektrisch isolierende Material erlaubt eine Verringerung des Abstands vom Wicklungskopf zur Sternpunktstromschiene. Dadurch kann der Bauraum verkleinert werden.

Vorzugsweise umfasst die Erfindung auch einen Stator für eine rotierende elektrische Maschine, mit einer Haltevorrichtung.

Der Stator kann mehrere Formleiter und einen Statorkern, in dem die Formleiter angeordnet sind umfassen. Die Haltevorrichtung kann an einer Stirnseite des Statorkerns angeordnet sein und die Formleiter durch die Durchgangsöffnungen verlaufen. Der Stator mit der Haltvorrichtung weist eine langlebigere und stabilere Positionierung der elektrischen Anordnung auf.

Der Statorkern kann als Blechpaket ausgebildet sein, das aus mehreren axial aufeinander geschichteten Elektrobleche aufgebaut ist.

Das Klemmelement eignet sich insbesondere zum Abstützen der Haltevorrichtung an den, aus dem Stator ragenden und gebogenen Formleitern: Durch die vom Klemmelement übertragene Kraft, von den Formleitern auf den Grundkörper, wird letzterer auf den Stator gedrückt und somit in Richtung der Statorachse gehalten. Die Durchgangsöffnung ist zum Durchführen von Formleitern und die geschlossene Kontur zur Positionierung in den Richtungen senkrecht zur Statorachse geeignet.

Der Temperatursensor kann mit einem der Formleiter verklebt sein. Dadurch kann die Position des Temperatursensors an dem Formleiter fixiert werden.

Die Anordnung kann eine Sternpunktstromschiene aufweisen die mit den Formleitern, welche Windungen aufweisen, elektrisch leitend verbunden ist.

Eine elektrische Maschine kann einen Stator mit einer erfindungsgemäßen Halterung aufweisen.

Ein elektrisch antreibbares Fahrzeug kann eine erfindungsgemäße elektrische Maschine und einen, innerhalb eines Rotoraufnahmeraums drehbar gelagerten, Rotor aufweisen

Sämtliche Ausführungen zur erfindungsgemäßen Halterung und zum erfindungsgemäßen Stator lassen sich analog auf das erfindungsgemäße Verfahren übertragen, sodass auch mit diesem die zuvor beschriebenen Vorteile erzielt werden können.

Der erfindungsgemäße Stator wird insbesondere mittels des erfindungsgemäßen Verfahrens hergestellt.

Das Verfahren zur Herstellung eines Stators beinhaltet folgende Schritte:
- bereitstellen eines Statorkerns, mit mehreren entlang des Umfangs angeordneten Nuten, die sich in Axialrichtung erstrecken,
- Auflegen einer erfindungsgemäßen Haltevorrichtung auf einer Stirnseite des Statorkerns,
- Einfügen der Formleiter in die Haltevorrichtung und in die Nuten,
- biegen, aneinanderfügen und paarweises Verschweißen der Formleiter,
- befestigen einer elektrischen Anordnung an der Haltevorrichtung.

Insbesondere kann ein die Formleiter einhüllendes Isolationspapier in die Nut eingebracht werden. Das Isolationspapier kann die Form eines Nutkastens aufweisen.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
Fig. 1 u 2 eine räumliche Ansicht eines ersten Ausführungsbeispiels der erfindungsgemäßen Haltevorrichtung;
Fig. 3 eine räumliche Ansicht einer Klammer für einen Temperatursensor für die erfindungsgemäße Haltevorrichtung;
Fig. 4 eine räumliche Ansicht einer Klammer mit einem Temperatursensor für die erfindungsgemäße Haltevorrichtung;
Fig. 5 eine geschnittene Detailansicht der Statorvorrichtung gemäß eines weiteren Ausführungsbeispiels Ausführungsbeispiel im Bereich der Haltevorrichtung;
Fig. 6 eine räumliche Ansicht eines Stators mit der erfindungsgemäßen Haltevorrichtung;
Fig. 7 eine Prinzipskizze eines Fahrzeugs mit einer elektrischen Maschine die erfindungsgemäße Haltevorrichtung beinhaltend.

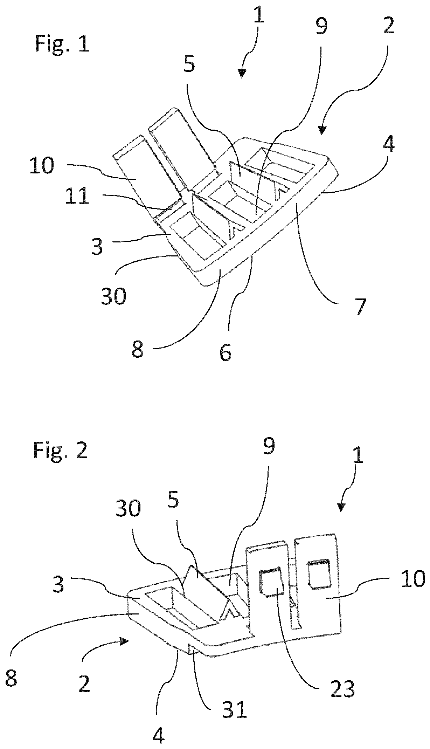

Die Fig. 1 u 2 zeigen eine räumliche Ansicht eines ersten Ausführungsbeispiels der erfindungsgemäßen Haltevorrichtung.

Die Haltevorrichtung 1 für einen Stator 19 einer elektrischen Rotationsmaschine, umfasst einen Grundkörper 2, aufweisend eine Oberseite 3 und eine Unterseite 4, einen umlaufenden Rand 8, der die Oberseite 3 mit der Unterseite 4 verbindet, und eine axiale Durchgangsöffnung 9, und auf der Oberseite 3 angeordnete Aufnahmeelemente 10 zur Befestigung elektrischer Anordnungen. Der Grundkörper 2 weist im abgebildeten Beispiel eine ringsektorförmige Grundfläche auf. Dadurch entspricht der Grundkörper der Form eines Teils einer Stirnseite 15 eines Stators 19 und kann einfach aufgelegt werden. Die Auflagefläche 6 liegt auf der Stirnseite 15 auf. Ein Radial außen gelegene Seite 7 des Randes 8 ist durch Speichen 30 mit einer radial innen gelegenen Seite des Randes 8 verbunden. Auf der Oberseite 3 der Speichen 30 liegen Klemmelemente 5 auf. Die Klemmelemente 5 können einstückig mit dem Grundkörper 2 geformt sein, oder darauf aufgebracht. Des Weiteren weist der Grundkörper 2 mehrere axiale Durchgangsöffnungen 9 auf, die von Speichen 30 begrenzt sind. Das Klemmelement 5 ist zwischen zwei der Durchgangsöffnungen 9 angeordnet. Die Oberseite 3 weist ein weiteres Klemmelement 5 auf und eine der Durchgangsöffnungen 9 ist zwischen den Klemmelementen 5 angeordnet. Der Grundkörper 2 weist wenigstens eine axial durchgängige Ablauföffnung auf, welche von dem Aufnahmeelement 10 begrenzt ist.

Die Ablauföffnung 11 ist radial innen von den Durchgangsöffnungen 9 angeordnet und radial mit einer der Durchgangsöffnungen fluchtend.

Zudem weist die Haltevorrichtung 1 eine Ausnehmung 31 auf. Die Ausnehmung 31 ist von der Stirnseite 15 des Statorkerns 16 beabstandet angeordnet, sodass überflüssiger Isolierstoff durch sie hindurch und von der Stirnseite 1 ablaufen kann und an der Stelle des Aufnahmeelementes keine Isolierstoffansammlung entstehen kann.

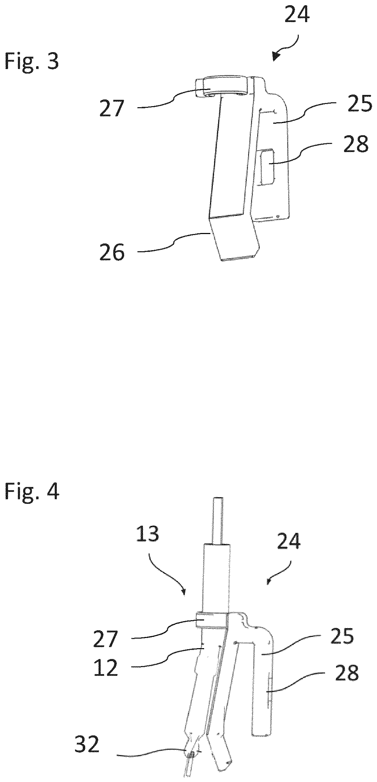

Fig. 3 zeigt eine Klammer 24, die auf ein Aufnahmeelement 10 aufgesteckt werden kann. Die Klammer umfasst zwei Schenkel 25, 26. Der erste Schenkel 25 weist eine Öse 28 auf. Durch diese Öse 28 kann ein, sich am Aufnahmeelement 10 hervorstehende Rastelement 23 einschnappen. Der zweite Schenkel 26, der zur Auflage eines Temperatursensors 12 geeignet ist der Wicklung 17 des Stators 19 zugewandt. Der zweite Schenkel 26 weist zusätzlich einen Haken 27 auf. Der Haken 27 ist einseitig am zweiten Schenkel 26 angebracht. Somit kann der Temperatursensor 12 einfach von einer anderen Seite, oder in Axialrichtung eingeführt, bzw. verhakt werden.

Fig. 4 zeigt eine elektrische Anordnung 13, im abgebildeten Beispiel den Temperatursensor 12 an der Klammer 24 aufliegen. Der obere Abschnitt des Temperatursensors 12 wird von dem Haken 27 gehalten und der untere Abschnitt des Temperatursensors 12 liegt auf dem zweiten Schenkel 26 auf. Am unteren Ende des Temperatursensors 12 befindet sich eine Messpille 32.

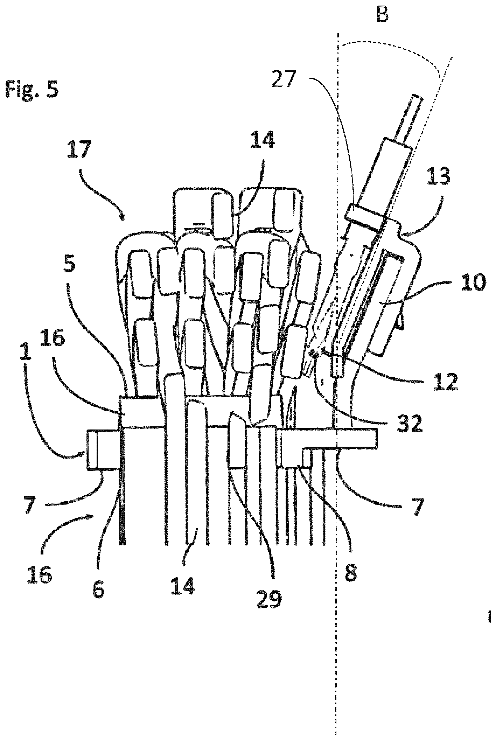

Fig. 5 zeigt im Querschnitt die Positionierung des Temperatursensors 12 am Wicklungskopf 17 einer weiteren Ausführungsform. Der Temperatursensor 12, der von der Klammer gehalten wird, liegt an einem Formleiter 14 an. Die Messpille 32 befindet sich am Wicklungskopf 17 und kann somit die Temperatur genau wiedergeben. Die Formleiter 14 sind in einer Nut 29 des Stators 19 geschichtet. Der aus der Nut 29 hervorstehende Teil der Formleiter durchdringt die Durchgangsöffnung 9 und bildet anschließend den Wicklungskopf 17. Das Aufnahmeelement 10 ist in einem Winkel zur Axialrichtung angeordnet, dadurch ist auch der Temperatursensor 12 in einem Winkel angeordnet und die Messpille 32 kann an einem Formleiter 14 anliegen.

Das Aufnahmeelement weist bezüglich der Axialrichtung, im vorliegenden Beispiel, einen Winkel B von 20 Grad auf.

Nicht gezeichnet ist der Anschluss des Temperatursensors 12.

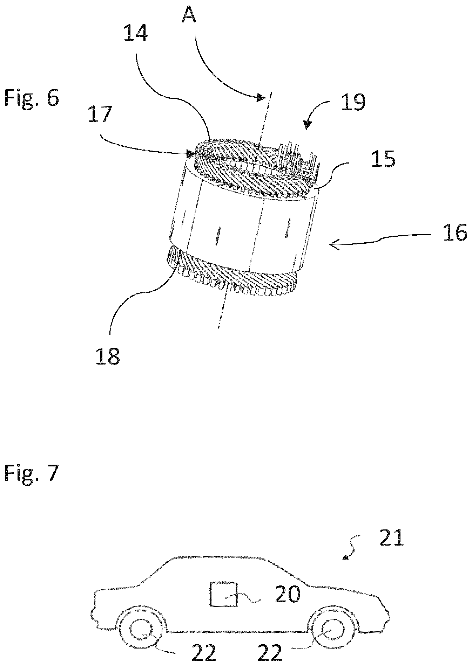

Fig. 6 zeigt einen Statorkern 16 mit einer Rotationsachse A. Der Statorkern 16 weist eine Stirnseite 15 und eine weitere, der Stirnseite 15, gegenüberliegenden Stirnseite 18 auf. An der Stirnseite 15 ragen die Formleiter 14 aus dem Statorkern 16 und bilden den Wicklungskopf 17. Aus der gegenüberliegenden Stirnseite 18 ragen Enden der Formleiter 14 heraus, die paarweise zusammengeschweißt sind.

Fig.7 zeigt eine Prinzipskizze eines Autos 21 mit einer elektrischen Maschine 20, die die Haltevorrichtung aufweisen kann und Rädern 22, die von der elektrischen Maschine angetrieben werden kann.
- 1: Haltevorrichtung
- 2: Grundkörper
- 3: Oberseite des Grundkörpers
- 4: Unterseite des Grundkörpers
- 5: Klemmelement
- 6: Auflagefläche
- 7: radial außen gelegene Seite des Randes
- 8: umlaufender Rand
- 9: axiale Durchgangsöffnung
- 10: Aufnahmeelement
- 11: Ablauföffnung
- 12: Temperatursensor
- 13: elektrische Anordnung
- 14: Formleiter
- 15: Stirnseite eines Stators
- 16: Statorkern
- 17: Wicklung, bzw. Wicklungskopf
- 18: weitere Stirnseite eines Stators
- 19: Stator
- 20: elektrische Rotationsmaschine
- 21: Fahrzeug
- 22: Rad
- 23: Rastelement
- 24: Klammer
- 25: erster Schenkel
- 26: zweiter Schenkel
- 27: Haken
- 28: Öse
- 29: Nut
- 30: Speichen
- 31: Ausnehmung
- 32: Messpille

## Patentansprüche

1. Haltevorrichtung (1) für einen Stator einer elektrischen Rotationsmaschine, umfassend
einen Grundkörper (2), aufweisend eine Oberseite (3), eine Unterseite (4), einen umlaufenden Rand (8), der die Oberseite (3) mit der Unterseite (4) verbindet, wenigstens eine axiale Durchgangsöffnung (9), und
ein auf der Oberseite (3) angeordnetes Aufnahmeelement (10) zur Befestigung einer elektrischen Anordnung.

2. Haltevorrichtung (1) nach Anspruch 1, mit einem auf der Oberseite (3) angeordneten Klemmelement (5).

3. Haltevorrichtung (1) nach Anspruch 1 oder 2, wobei der Grundkörper (2) mehrere axiale Durchgangsöffnungen (9) aufweist.

4. Haltevorrichtung (1) nach Anspruch 2 und 3, wobei das Klemmelement (5) zwischen zwei der Durchgangsöffnungen (9) angeordnet ist.

5. Haltevorrichtung (1) nach Anspruch 2, wobei die Oberseite (3) ein weiteres Klemmelement (5) aufweist und eine der Durchgangsöffnungen (9) zwischen den Klemmelementen (5) angeordnet ist.

6. Haltevorrichtung (1) nach einem der vorhergehenden Ansprüche, wobei der Grundkörper (2) wenigstens eine axial durchgängige Ablauföffnung (11) aufweist, welche von dem Aufnahmeelement (10) begrenzt ist.

7. Haltevorrichtung (1) nach Anspruch 6, wobei die Ablauföffnung (11) radial innen von den Durchgangsöffnungen (9) angeordnet ist und/oder radial mit einer der Durchgangsöffnungen (9) fluchtet.

8. Haltevorrichtung (1) nach einem der vorhergehenden Ansprüche, wobei eine elektrische Anordnung (13) an dem Aufnahmeelement (10) befestigt ist.

9. Haltevorrichtung (1) nach Anspruch 8, wobei die elektrische Anordnung (13), einen Temperatursensor (12) und/oder eine Sternpunktstromschiene umfasst.

10. Stator (19) für eine rotierende elektrische Maschine, mit einer Haltevorrichtung (1) nach einem der Ansprüche 1 bis 9.

11. Stator (19) nach Anspruch 10, aufweisend:
mehrere Formleiter (14) und
ein Statorkern (16), in dem die Formleiter (14) angeordnet sind,
wobei die Haltevorrichtung (1) an einer Stirnseite (15) des Statorkerns (16) angeordnet ist, und die Formleiter (14) durch eine der Durchgangsöffnungen (9) verlaufen.

12. Stator (19) nach Anspruch 10, aufweisend ein auf einer Oberseite (3) der Haltevorrichtung (1) angeordnetes Klemmelement (5), wobei einer der Formleiter (14) an dem Klemmelement (5) anliegt, sodass die Haltevorrichtung (1) an dem Statorkern (15) gehalten wird.

13. Stator (19) nach Anspruch 11 oder 12, wobei die Anordnung einen Temperatursensor aufweist, der mit einem der Formleiter (14) verklebt ist.

14. Stator (19) nach Anspruch 11, wobei die Anordnung eine Sternpunktstromschiene aufweist, die mit den Formleitern (14), welche als Windungen (17) ausgebildet sind, elektrisch leitend verbunden ist.

15. Elektrische Rotationsmaschine (20), aufweisend einen Stator (19) nach einem der Ansprüche 10 bis 13.
